**Europäisches Patentamt**

**European Patent Office**

**Office européen des brevets**

(19)

(11) Veröffentlichungsnummer: **0 037 572**
**B1**

(12) # EUROPÄISCHE PATENTSCHRIFT

(45) Veröffentlichungstag der Patentschrift:
**12.10.83**

(21) Anmeldenummer: **81102571.7**

(22) Anmeldetag: **06.04.81**

(51) Int. Cl.³: **B 60 D 1/06**

(54) **Abnehmbare Kugelstange mit Halterung.**

(30) Priorität: **05.04.80 DE 3013408**

(43) Veröffentlichungstag der Anmeldung:
**14.10.81 Patentblatt 81/41**

(45) Bekanntmachung des Hinweises auf die Patenterteilung:
**12.10.83 Patentblatt 83/41**

(84) Benannte Vertragsstaaten:
**AT BE CH FR GB IT LI NL SE**

(56) Entgegenhaltungen:
**DE-A-1 580 656**
**DE-A-1 630 928**
**DE-A-1 655 012**
**DE-A-2 406 983**
**DE-A-2 410 169**
**DE-A-2 425 440**
**DE-A-2 723 073**
**DE-A-3 000 824**
**US-A-2 877 025**
**US-A-2 978 260**
**US-A-3 503 627**
**US-A-3 503 628**

(73) Patentinhaber: **PEKA-Fahrzeugbau GmbH & Co. KG,**
**Rheinstrasse 116, D-7500 Karlsruhe 21 (DE)**

(72) Erfinder: **Dickmann, Thomas, Dr. Ing.,**
**Erich-Heckel-Strasse 63, D-7500 Karlsruhe 41 (DE)**

(74) Vertreter: **Trappenberg, Hans,**
**Postfach 1909 Wendtstrasse 1, D-7500 Karlsruhe 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Abnehmbare Kugelstange mit Halterung

Die Erfinfung betrifft eine abnehmbare Kugelstange mit Halterung, insbesondere für PKW, bestehend aus einer am Fahrzeugheck angebrachten Hülse in die die Kugelstange mit ihrem Schaft einschiebbar und in der eingeschobenen Stellung mittels eines die Kugelstange an einen Anschlag führenden in Richtung des Schaftes längsverschiebbaren Schiebers arretierbar ist.

Die derartige Ausführung einer abnehmbaren Kugelstange mit Halterung ist in der DE-A-1 655 012 dargestellt und beschrieben. In die dort vorgesehene vierkantige Hülse kann der ebenfalls vierkantige Kugelstangenschaft eingeführt werden, solange bis eine in der Hülse vorgesehene Verstärkung in eine entsprechende Ausnehmung im Kugelstangenschaft eingreift. Diese Position wird sodann durch Einführen eines Schiebers unter den Kugelstangenschaft gesichert. Der Nachteil bei dieser Konstruktion ist der, dass eine spielfreie Verbindung der Kugelstange mit der Hülse nicht möglich ist, und auch dass die Hülse verhältnissmässig lang sein muss um einen korrekten Sitz der Kugelstange in der Hülse zu gewährleisten. Das Anbringen der Hülse beispielsweise innerhalb des freien Raumes einer Stossstange, so dass die Hülse vollkommen unsichtbar ist, ist bei dieser Konstruktion nicht möglich. Dadurch aber auch werden sämtliche Konstruktionsteile, da sie unterhalb des Wagenbodens angebracht werden müssen, sehr stark verschmutzt, so dass nicht nur die Funktion, sondern unter Umständen auch die Betriebssicherheit dieser Anhängevorrichtung nicht gewährleistet ist.

Aufgabe der Erfindung ist es eine abnehmbare Kugelstange mit Halterung anzugeben, die so ausgebildet ist, dass die Kugelstange in ihrer Halterung spielfrei verankert werden kann, dass sie trotzdem leicht montierbar ist, dass die einzelnen Teile also mit grossen Spiel zusammengeführt werden können, dass die Halterung so kurz ist, dass sie noch innerhalb des beengten Raumes zwischen Karosserie und Stossstange unterzubringen ist und dass ihre Funktion auch bei Verschmutzung gewährleistet ist. Eine derartige Konstruktion wäre dann nicht nur als Anhängevorrichtung geeignet, sondern ganz allgemein dann, wenn eine leicht lösbare Verbindung mit spielfreiem Sitz für hohe Beanspruchung durch Kräfte in wechselnder Richtung gewünscht ist. Eine selbstverständliche Voraussetzung ist hierbei, dass die eingeführte Kugelstange auf jeden Fall gegen ein unbeabsichtigtes Lösen oder Öffnen gesichert sein muss. Darüber hinaus muss auch eine einfache und wirtschaftliche Herstellung der einzelnen Teile möglich sein.

Erreicht wird dies nach der Erfindung bei der beschriebenen abnehmbaren Kugelstange mit Halterung dadurch, dass der Schieber längsverschiebbar und in der Endstellung verriegelbar am Kugelstangenschaft angebracht ist und eine im Betriebszustand in die Hülse eingreifende und an der einführungsseitigen Stirnkante der Hülse anschlagende Verstärkung aufweist, dass am Ende des Kugelstangenschaftes ein sich im Betriebszustand an die hintere Hülsenstirnseite anlegender Nocken vorgesehen ist und dass die lichte Weite der den Kugelstangenschaft führenden Hülse einführungsseitig der Höhe des Schiebers zuzüglich der Schaftstärke, zuzüglich der Nockenhöhe entspricht und sich die lichte Weite am Ende der Hülse auf der Schieberseite durch eine Stufe auf die Höhe des Schiebers zuzüglich der Schaftstärke verringert.

Auch bei dieser erfindungsgemässen Ausführung wird demnach ein Schieber zum Positionieren des Kugelstangenschaftes an einem Anschlag verwendet, jedoch ist der Schieber längs verschiebbar mit dem Kugelstangenschaft verbunden und übernimmt zusätzlich die Arretierung des Kugelstangenschaftes in seiner Längsrichtung. Dadurch ist der Kugelstangenschaft in seiner Position einmal durch den an der Hinterseite der Hülse angreifenden Nocken und zum anderen durch den an der Vorderseite der Hülse angreifenden Schieber in seiner Betriebslage gesichert, wodurch es möglich ist nicht nur eine sehr kurze Hülse zu verwenden, sondern die Arretierung der Kugelstange in der Hülse auch noch spielfrei zu gestalten. Die Spielfreiheit wird bei einer besonders zweckmässigen Ausführung der Erfindung automatisch dadurch erreicht, dass der Schieber durch eine, den Schieber in Richtung auf das Schaftende drückende Federkraft belastet ist. Diese Federkraft bewirkt, dass sowohl der Nocken des Kugelstangenschaftes auf die rückseitige Stirnseite der Hülse aufgepresst wird, wie auch dass sich die Verstärkung des Schiebers fest an die Vorderkante der Hülse anlegt. Hierdurch ergibt sich eine eindeutige Arretierung an vier Drucklinien, nämlich an den Paarungen Nocken/hintere Stirnfläche der Hülse, Schieber/vordere Stirnseite der Hülse, Schieber Endseite/rückseitige Innenkante der Hülse und Kugelstangenschaft/vordere Innenkante der Hülse. Trotz dieses im Betriebszustand äusserst festen und sicheren Sitzes der Kugelstange in ihrer Hülse, kann der Kugelstangenschaft unschwer in die Hülse eingeführt werden, da beim Einführen der Schieber zurückbleibt, also ausreichend Raum zum Einführen der Kugelstange, auch bei verschmutzter Hülse bzw. verschmutzter Kugelstange verbleibt. Erst dann, wenn sich der Nocken des Kugelstangenschaftes an die hintere Stirnseite der Hülse angelegt hat, kann auch der Schieber in die Verengung der Hülse vorgeschoben werden bzw. wird durch die Federkraft vorgeschoben und auch erst dann verkeilt sich der Kugelstangenschaft in der beschriebenen Art und Weise. Gleich einfach ist selbstverständlich das Herausnehmen der Kugelstange aus der Hülse, indem lediglich der Schieber zurückzuziehen und sodann die Kugelstange auch bei Verschmutzung herauszunehmen ist.

Selbstverständlich wäre es auch möglich die Hülse rückseitig abzuschliessen, so dass der Kugelstangenschaft dadurch in der Einführrichtung blockiert wäre. Dadurch ist jedoch die gewünschte absolut spielfreie Verbindung der Kugelstange bzw. des Kugelstangenschaftes mit der Hülse nicht möglich, obwohl auch bei einer solchen Konstruktion eine gewisse Verkeilung dann stattfindet, wenn die Anschlagflächen an der Hülse als Schrägflächen ausgeführt werden.

Eine zusätzliche Sicherung, neben der den Schieber in seine Endlage führenden Druckfeder, kann dadurch vorgesehen werden, dass am Kugelstangenschaft zwei den Schieber zwischen sich aufnehmende Laschen angeordnet sind und ein die Laschen und den Schieber in Betriebsstellung durchquerender Verriegelungsbolzen vorgesehen ist. Dieser Verriegelungsbolzen kann auch federbelastet sein, so dass er automatisch dann einschnappt, wenn sich der Schieber in seiner Endlage befindet.

Eine äusserst vorteilhafte Ausführung der Erfindung ist dadurch gegeben, dass die hintere und vordere Hülsenstirnkante im Bereich des Nockens und der Verstärkung wie auch der Nocken und die an der vorderen Hülsenstirnkante anschlagende Schieber-Verstärkung in das Innere der Hülse hinein abgeschrägt sind. Selbst wenn die eingeschobene Kugelstange und der Schieber nicht satt an der Hülse anliegen sollten, ist bei dieser Ausführung erreicht, dass bei geringfügigen Bewegungen der Kugelstange sich diese mehr und mehr, durch den Druck der den Schieber belastenden Feder in die Betriebslage bewegt, bzw. dass der Sitz von Kugelstange und Schieber durch diese geringfügigen Bewegungen stets verbessert wird. Es ist also nicht nur ein unbeabsichtiges Lösen der Kugelstange in der Halterung vermieden, sondern es wird durch derartige Bewegungen der Sitz der Kugelstange in der Halterung noch verbessert.

Eine weitere Verbesserung ergibt sich dadurch, dass der Verriegelungsbolzen ein verdrehbarer und in der Betriebsstellung festsetzbarer Exzenterbolzen ist. Mittels dieses Exzenterbolzens kann der Kugelstangenschaft bzw. der Schieber so in der Hülse verspannt werden, dass diese Teile absolut sicher und fest auf der Hülse aufgepresst sind. Vorteilhafterweise greift der Exzenterbolzen in ein im Schieber geringfügig quer verschiebbar geführtes Gleitstück ein, wobei das Gleitstück auch aus geringfügig elastischem Material sein kann.

Eine sehr zweckmässige Ausführung des Gleitstückes ist dadurch gegeben, dass es im Querschnitt quadratisch ist und seine Bohrung aussermittig in unterschiedlichen Abständen von den Aussenflächen angebracht ist. Dadurch ist die Möglichkeit gegeben Fertigungstoleranzen auszugleichen, so dass die Kugelstange beziehungsweise der Schieber stets fest mit vorgegebener Spannung an die Hülse angepresst wird.

Als nachteilig könnte empfunden werden, dass der Verriegelungsbolzen beziehungsweise Exzenterbolzen, der der zusätzlichen Sicherung beziehungsweise dem extremen Verspannen der einzelnen Teile dient, ein separates Bauteil ist. Da die Konstruktion auch ohne dieses Bauteil betriebsfähig ist, könnte daher im Gebrauch auf die Verwendung des Bolzens verzichtet werden, damit aber auch auf diese zusätzliche Sicherung beziehungsweise das erwünschte Verspannen der einzelnen Teile gegeneinander. In weiterer Ausbildung der Erfindung bildet dieser Verriegelungsbolzen einen integrierten Bestandteil der Konstruktion dadurch, dass der Schieber zweigeteilt ist in einen in die Hülse eingreifenden und einen an der Hülse anschlagenden Teil, wobei beide Teile unabhängig voneinander begrenzt längs verschiebbar am Kugelstangenschaft geführt sind und am Kugelstangenschaft ein den anschlagenden Schieberteil durchquerender Exzenterbolzen verdrehbar gelagert ist, der über einen Mitnehmer mit dem eingreifenden Schieberteil verbunden ist.

Damit bildet der Verriegelungsbolzen beziehungsweise Exzenterbolzen kein separates Bauteil mehr, sondern er ist unverlierbar am Kugelstangenschaft verdrehbar gelagert. Der Kugelstangenschaft zusammen mit dem geteilten Schieber und dem Exzenterbolzen bilden damit eine einzige Einheit, die zusammen in der Hülse eingeschoben beziehungsweise aus ihr herausgenommen wird. Der Exzenterbolzen als Verriegelungsbolzen sichert also immer die Lage des Schiebers und zwar des an die Hülse anschlagenden Teiles, während das in die Hülse eingreifende Teil unabhängig hiervon in die Hülse eingreifen und die korrekte Lage des Kugelstangenschaftes in der Hülse sichern kann. Durch den am Exzenterbolzen vorgesehenen Mitnehmer wird darüber hinaus, beim Verdrehen des Exzenterbolzens, nicht nur das an der Hülse anschlagende Schieberteil bzw. auch der Kugelstangenschaft in der Hülse verspannt, sondern es wird gleichzeitig auch das in die Hülse eingreifende Schieberteil zwangsweise in die Betriebslage verschoben und gleichzeitig gesichert.

Damit auch ohne diese Sicherung durch Verdrehen des Exzenterbolzens der Schieber stets in seine Endlage geführt wird empfiehlt es sich, dass das eingreifende Schieberteil durch eine es in Richtung auf das Schaftende drückende Federkraft belastet ist.

Als Mitnehmer wird zweckmässigerweise ein mit einem kreisbogenförmigen Ausschnitt versehenes mit dem Exzenterbolzen verbundenes Führungsblech verwendet, in dessen Ausschnitt ein mit dem eingreifenden Schieberteil verbundener Bolzen eingreift. Ein derartiger Mitnehmer vermeidet wartungsintensive Gelenke und dient damit den Betriebssicherheit der Konstruktion. Das in die Hülse eingreifende Schieberteil kann sich der Form des Kugelstangenschaftes anpassen; zweckmässig ist jedoch diesen Schieberteil als planer Schieber vorzusehen und dementsprechend auch den Kugelstangenschaft zu formen. Nach der Erfindung ist daher der Kugelstangenschaft vierkantig, wobei mit Vorteil die Seitenflächen quer zu seiner Längserstreckung keilförmig ausgebildet sind. Dadurch kann noch eine zusätzliche Verkleinerung des seitlichen Spiels beim Verspannen des Kugelstangenschaftes in der Hülse erreicht werden.

Auf der Zeichnung sind Ausführungsbeispiele des Erfindungsgegenstandes schematisch dargestellt und zwar zeigen:

Figur 1 die Kugelstange mit Schieber in der Hülse, im Betriebszustand

Figur 2 in Teildarstellung die Kugelstange mit Schieber beim Einführen in die Hülse,

Figur 3 die Ausführung mit geteiltem Schieber und

Figur 4 einen Querschnitt nach IV-IV der Figur 3.

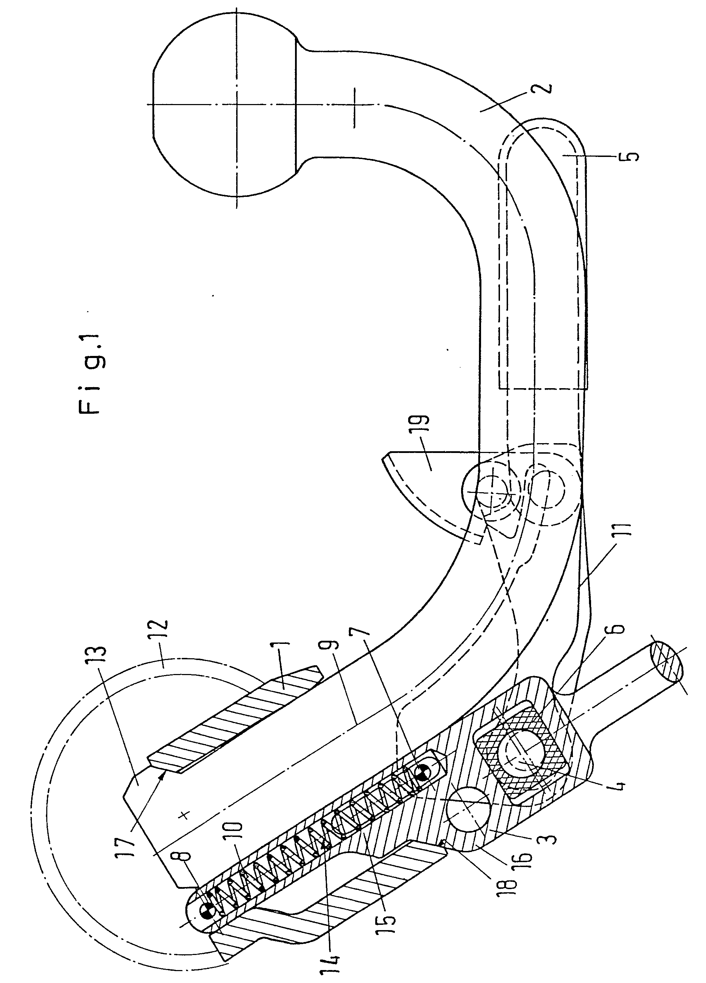

Die Hülse 1 einer Kugelstangenhalterung (Fig. 1) ist mittels Befestigungselementen 12 (strichpunktiert eingezeichnet) am Heck eines Fahrzeugs, beispielsweise im freien Raum zwischen der Karosserie und der hinteren Stossstange befestigt. In die Hülse 1 eingeführt ist der Schaft 9 einer Kugelstange 2 wobei sich ein am hinteren Ende des Schaftes 9 befindlicher Nocken 13 an die hintere Stirnkante der Hülse 1 anlegt. An der Kugelstange 2 sind beidseitig Laschen 11 angebracht bzw. angeformt die zwischen sich einen Schieber 3 aufnehmen. Der Schieber 3 ist über einen Bolzen 7 mit diesen Laschen verbunden so, dass der Schieber 3 noch über ein Langloch 14 entlang des Kugelstangenschaftes 9 längs verschiebbar ist. Im Schieber 3 ist eine Druckfeder 10 untergebracht, die sich einerseits an dem Bolzen 7 und andererseits an einem endständigen Bolzen 8 abstützt. Dadurch wird der Schieber 3 stets in Richtung auf das Schaftende des Kugelstangenschaftes 9 gedrückt. Der Schieber 3 weist an seiner Aussenfläche eine treppenförmige Verstärkung 15, 16 auf, wobei die erste Stufe der Verstärkung (15) in die Hülse 1 eingreift während sich die zweite Stufe (16) an die vordere Stirnkante der Hülse 1 anlegt. Sowohl die Hinterkante 17 der Hülse 1 im Bereich des Nockens 13 wie auch deren Vorderkante 18 im Bereich der stufenförmigen Verstärkung 16 des Schiebers 3 sind ins Innere der Hülse 1 hinein abgeschrägt, ebenso wie der Nocken 13 und die Verstärkung 16 des Schiebers 3. Durch den Druck der Feder(n) 10 wird der Schieber 3 in die gezeigte Lage geführt und presst hierbei den Nocken 13 auf die abgeschrägte Anlagefläche 17 bzw. den Schieber 3 mit seiner Verstärkung 16 auf die entsprechend abgeschrägte Stirnfläche 18. Dieser Andruck kann noch verstärkt werden durch einen Exzenterbolzen 4 der die Laschen 11 durchgreift und ein im Schieber 3 untergebrachtes Gleitstück 6 durchquert. Der Exzenterbolzen 4 weist einen Handgriff 5 auf mit dem der Exzenterbolzen 4 auch in seiner Betriebslage durch Arretierungsmittel 19 gehalten werden kann.

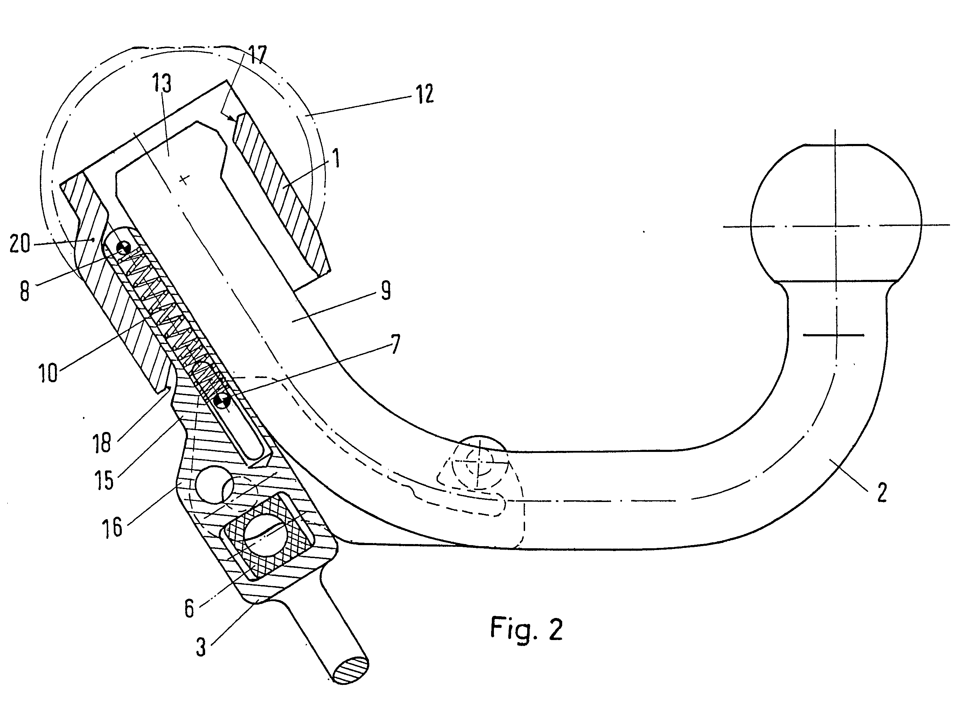

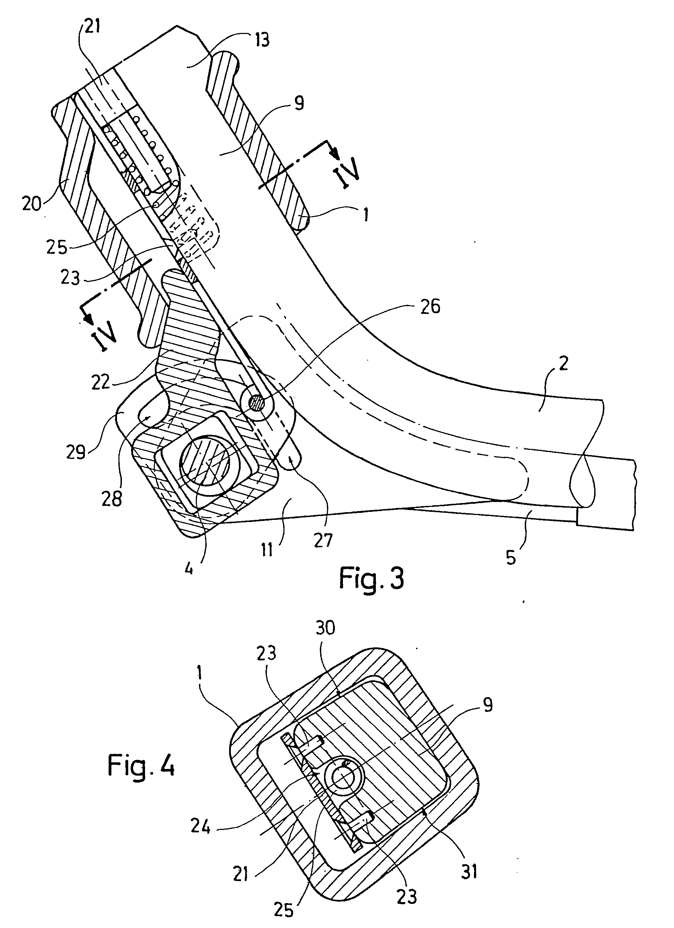

In Fig. 2 ist das Einführen der Kugelstange 2 in die Hülse 1 dargestellt. Die Kugelstange mit ihrem Schaft 9 wird hierbei so in die Hülse 1 eingeführt, dass der Nocken 13 wie auch der Schieber 3 solange an den Innenflächen der Hülse 1 gleiten, bis der Schieber 3 an eine Verengung 20 der Hülse 1 anschlägt. Hier wird der Schieber 3 unter Spannung der Druckfeder 10 zurückgehalten solange, bis sich der Nocken 13 hinter die abgeschrägte Stirnfläche 17 der Hülse 1 legt. Sodann bewegt sich auch der Schieber 3 durch den Druck der Druckfeder(n) 10 in Richtung auf das Schaftende, solange, bis sich die erste Stufe der Verstärkung 15, 16 des Schiebers 3 in die Hülse hineinschiebt und die zweite Stufe 16 der Verstärkung des Schiebers 3 sich an die vordere Stirnfläche 18 der Hülse 1 anlegt. Bereits in dieser Stellung ist der Kugelstangenschaft 9 praktisch spielfrei in der Hülse 1 gehalten; gesichert und zusätzlich satt an die Anlageflächen der Hülse 1 angelegt wird der Schieber durch das Einführen des Exzenterbolzens 4 in die entsprechenden Bohrungen der Laschen 11 bzw. das Gleitstück 6. Damit ist die Kugelstange 2 nicht nur sicher sondern auch vollkommen spielfrei in der Hülse 1 gehalten, so dass Beschädigungen dieser Teile beim Angriff von Kräften in wechselnden Richtungen nicht auftreten können. In der Ausführung nach den Figuren 3 und 4 ist der Schieber geteilt ausgeführt in den in die Hülse 1 eingreifenden Teil 21 und den an der Hülse anschlagenden Teil 22. Der in die Hülse 1 eingreifende Schieberteil 21 ist mittels Führungsstiften 23 am Kugelstangenschaft 9 geführt. In einer Aussparung 24 des Kugelstangenschaftes 9 ist eine Druckfeder 25 untergebracht die den Schieberteil 21 in Richtung auf das Schaftende drückt. Weiter geführt ist dieser Schieberteil 21 durch einen am hinteren Ende eingerollten Bolzen 26, der in Langlöchern 27, die in den Laschen 11 vorgesehen sind hineinragt. Dieser Bolzen 26 durchquert ausserdem kreisringförmige Ausschnitte 28 in beidseits bei den Laschen 11 vorgesehenen Führungsblechen 29 die ihrerseits mit dem Exzenterbolzen 4 verbunden sind. Der Exzenterbolzen 4 durchquert hierbei die Laschen 11, wie auch den an der Hülse anschlagenden Schieberteil 22.

Prinzipiell ist der Montage- und Demontagevorgang der Kugelstange der gleiche wie zuvor beschrieben, jedoch ist der Exzenterbolzen 4 mit seinem Handgriff 5 bei der erfindungsgemässen Ausführung bereits integrierter Bestandteil der Konstruktion. Die Kugelstange 2 mit den beiden Schieberteilen 21 und 22 sowie dem Exzenterbolzen 4 bilden also eine Einheit, die gemeinsam in die Hülse 1 eingeführt und auch aus ihr wieder herausgenommen wird. Auch hier wird beim Einführen des Kugelstangenschaftes 9 in die Hülse 1 der Schieberteil 21 an der Verengung 20 der Hülse solange zurückgehalten, bis sich der Nocken 13 hinter die endseitige Stirnkante der Hülse 1 gelegt hat. Erst dann wird dieser Schieberteil 21, dem Druck der Feder 25 nachgebend, sich in die gezeigte Lage verschieben. In dieser Stellung ist bereits die Kugelstange 2 in der Hülse 1 gesichert, da ohne willkürliches Zurückziehen des Schieberteiles 21 der Kugelstangenschaft 9 nicht aus der Hülse 1 entfernt werden kann. Um jedoch noch das gewünschte spielfreie Verspannen des Kugelstangenschaftes 9 in der Hülse 1 zu erreichen, wird der Exzenterbolzen 4 mittels des Handgriffes 5 in seine durch den Schnapper 19 gesicherte Endstellung verschwenkt, wodurch sich der an der Hülse 1 anschlagende Schieberteil 22 in die Hülse hineinbewegt und dabei, in schon beschriebener Weise, den Kugelstangenschaft 9 in der Hülse verspannt. Sollte der in die Hülse 1 eingreifende Schieberteil 21 durch die Druckfeder 25 noch nicht in seine Endlage gedrückt worden sein, so erfolgt nunmehr durch die Verdrehung des Exzenterbolzens 4, an dem die Führungsbleche 29 fest angebracht sind, ein zwangsweises Vorschieben dieses Schieberteiles 21 über die Endkante des Ausschnittes 28 bzw. den an diese Endkante anschlagenden Bolzen 26. Ausserdem wird sodann, in der Endstellung, dieser in die Hülse 1 eingreifende Schieberteil 21 fest an den Kugelstangenschaft 9 angepresst, so dass sämtliche Konstruktionsteile eine kompakt in sich verspannte Einheit bilden.

Zum Herausnehmen der durch den Kugelstangenschaft 2 die Schieberteile 21, 22 und den Exzenterbolzen 4 gebildeten Einheit aus der Hülse 1 wird der Exzenterbolzen 4 durch Verschwenken des Handgriffes 5 in die Öffnungsstellung verbracht, wobei zunächst die durch den Exzenterbolzen 4 erzeugte Spannung gelöst und danach, durch die jenseitige Endkante des Ausschnittes 28 im Führungsblech 29, der in die Hülse 1 eingreifende Schieberteil 21 soweit zurückgezogen wird, dass er im Freiraum der Hülse 1 liegt und der Kugelstangenschaft 9 somit verschwenkt und sodann herausgezogen werden kann. Bei dem Verschwenken des Kugelstangenschaftes 9 wird gleichzeitig, da die Flanken 30, 31 des Kugelstangenschaftes 9, wie auch die entsprechenden Seitenflächen der Hülse 1 keilförmig ausgebildet sind, der Abstand zwischen diesen Flanken 30, 31 und den entsprechenden Seitenwänden der Hülse 1 vergrössert, so dass selbst eingedrungener Schmutz oder Passungsrost etc. das Herausnehmen, wie auch das spätere Einführen der Kugelstange 2 nicht behindert.

## Patentansprüche

1. Abnehmbare Kugelstange mit Halterung, insbesondere für PKW, bestehend aus einer am Fahrzeugheck angebrachten Hülse (1), in die die Kugelstange (2) mit ihrem Schaft (9) einschiebbar und in der eingeschobenen Stellung mittels eines die Kugelstange (2) an einen Anschlag führenden in Richtung des Schaftes (9) längsverschiebbaren Schiebers (3) arretierbar ist, dadurch gekennzeichnet, dass der Schieber (3) längsverschiebbar und in der Endstellung verriegelbar am Kugelstangenschaft (9) angebracht ist und eine im Betriebszustand in die Hülse (1) eingreifende (15) und an der einführungsseitigen Stirnkante (18) der Hülse (1) anschlagende Verstärkung (16) aufweist, dass am Ende des Kugelstangenschaftes (9) ein sich im Betriebszustand an die hintere Hülsenstirnseite (17) anlegender Nocken (13) vorgesehen ist und dass die lichte Weite der den Kugelstangenschaft (9) führende Hülse (1) einführungsseitig der Höhe des Schiebers (3) zuzüglich der Stärke des Schaftes (9) zuzüglich der Höhe des Nockens (13) entspricht und sich die lichte Weite am Ende der Hülse auf der Schieberseite durch eine Stufe (20) auf die Höhe des Schiebers (3) zuzüglich der Schaftstärke verringert.

2. Vorrichtung nach Anspruch 1, dadurch gekennzeichnet, dass der Schieber (3) durch eine, den Schieber (3) in Richtung auf das Schaftende drückende Federkraft belastet ist.

3. Vorrichtung nach einem oder mehreren der vorhergehenden Ansprüche, dadurch gekennzeichnet, dass am Kugelstangenschaft (9) zwei, den Schieber (3) zwischen sich aufnehmende Laschen (11) angeordnet sind und ein die Laschen (11) und den Schieber (3) in Betriebsstellung durchquerender, vorzugsweise federbelasteter Verriegelungsbolzen vorgesehen ist.

4. Vorrichtung nach Anspruch 3, dadurch gekennzeichnet, dass die hintere und vordere Hülsenstirnkante (17, 18) im Bereich des Nockens (13) und der Verstärkung (16) wie auch der Nocken (13) und die an der vorderen Hülsenstirnkante anschlagende Schieberverstärkung (16) in das Innere der Hülse (1) hinein abgeschrägt sind und dass der Verriegelungsbolzen ein verdrehbarer und in der Betriebsstellung festsetzbarer Exzenterbolzen (4) ist.

5. Vorrichtung nach Anspruch 4, dadurch gekennzeichnet, dass der Exzenterbolzen (4) in ein im Schieber (3) geringfügig quer verschiebbar geführtes Gleitstück (6) eingreift.

6. Vorrichtung nach Anspruch 5, dadurch gekennzeichnet, dass das Gleitstück (6) aus geringfügig elastischem Material ist.

7. Vorrichtung nach Anspruch 5 oder 6, dadurch gekennzeichnet, dass das Gleitstück (6) im Querschnitt quadratisch ist und seine Bohrung aussermittig mit unterschiedlichen Abständen von den Aussenflächen angebracht ist.

8. Vorrichtung nach einem oder mehreren der vorhergehenden Ansprüche, dadurch gekennzeichnet, dass der Schieber zweigeteilt ist in den in die Hülse (1) eingreifenden Teil (21) und den an der Hülse (1) anschlagenden Teil (22), wobei beide Teile (21, 22) unabhängig voneinander begrenzt längs verschiebbar am Kugelstangenschaft (9) geführt sind und am Kugelstangenschaft (9) ein den anschlagenden Schieberteil (22) durchquerender Exzenterbolzen (4) verdrehbar gelagert ist, der über einen Mitnehmer mit dem eingreifenden Schieberteil (21) verbunden ist.

9. Vorrichtung nach Anspruch 8, dadurch gekennzeichnet, dass der eingreifende Schieberteil (21) durch eine, in Richtung auf das Schaftende drückende Federkraft (25) belastet ist.

10. Vorrichtung nach Anspruch 8, dadurch gekennzeichnet, dass der Mitnehmer ein mit einem kreisbogenförmigen Ausschnitt (28) versehenes, mit dem Exzenterbolzen (4) verbundenes Führungsblech (29) ist, in dessen Ausschnitt (28) ein mit dem eingreifenden Schieberteil (21) verbundener Bolzen (26) eingreift.

11. Vorrichtung nach einem oder mehreren der vorhergehenden Ansprüche, dadurch gekennzeichnet, dass der Kugelstangenschaft (9) vierkantig ist und dass die Seitenflächen (30, 31) des Kugelstangenschaftes (9) quer zu seiner Längserstreckung keilförmig ausgebildet sind.

## Revendications

1. Tige à rotule amovible avec monture, en particulier pour automobiles de trourisme, formée d'une douille (1) disposée à l'arrière du véhicule et dans laquelle la tige à rotule (2) peut s'enfoncer par son corps (9) et peut être arrêtée dans la position arrêtée au moyen d'un coulisseau (3) pouvant coulisser longitudinalement dans la direction du corps (9) et guidant la tige à rotule (2) par une butée, caractérisée en ce que le coulisseau (3) peut coulisser longitudinalement et qu'il est disposé sur le corps (9) de la tige à rotule de manière à pouvoir être verrouillé dans la position extrême et présente un renforcement (16) qui, dans l'état de service, s'engage (15) dans la douille (1) et bute contre le côté frontal d'introduction (18) de la douille, en ce qu'à l'extrémité du corps (9) de la tige à rotule est prévue une saillie (13), qui s'applique dans l'état de service contre le côté frontal postérieur (17) de la douille, et en ce que la largeur libre de la douille (1) guidant le corps (9) de la tige à rotule, du côté d'introduction, correspond à la hauteur du coulisseau (3) plus l'épaisseur du corps (9) et plus la hauteur de la saillie (13) et à l'extrémité de la douille, du côté du coulisseau, la largeur libre est ramenée, par un gradin (20), à la hauteur du coulisseau (3) plus l'épaisseur de la tige.

2. Dispositif selon la revendication 1, caractérisé en ce que le coulisseau (3) est sollicité par une force de ressort, qui pousse le coulisseau (3) en direction de l'extrémité du corps.

3. Dispositif selon une ou plusieurs des revendications précédentes, caractérisé en ce que sur le corps (9) de la tige à rotule sont disposées deux pattes (11) recevant le coulisseau (3) entre elles et qu'il est prévu un goujon de verrouillage, de préférence sollicité par ressort, traversant le coulisseau (3) en position de service.

4. Dispositif selon la revendication 3, caractérisé en ce que les bords frontaux postérieur et antérieur (17, 18) de la douille sont biseautés vers l'intérieur de la douille dans la région de la saillie (13) et du renforcement (16), de même que la saillie (13) et le renforcement de coulisseau (16) butant contre le bord frontal antérieur de la douille, et en ce que le goujon de verrouillage est un goujon excentrique (4) pouvant tourner et pouvant être bloqué dans la position de service.

5. Dispositif selon la revendication 4, caractérisé en ce que le goujon excentrique (4) s'engage dans un patin (6) guidé dans le coulisseau (3) de manière à pouvoir légèrement coulisser transversalement.

6. Dispositif selon la revendication 5, caractérisé en ce que le patin (6) est formé de matière légèrement élastique.

7. Dispositif selon la revendication 5 ou 6, caractérisé en ce que le patin (6) a une section carrée et que sa perforation est disposée excentriquement avec des distances différentes aux surfaces extérieures.

8. Dispositif selon une ou plusieurs des revendications précédentes, caractérisé en ce que le coulisseau est divisé en deux, comprenant la partie (21), qui s'engage dans la douille (1), et la partie (22), qui bute contre la douille (1), les deux parties (21, 22) étant guidées sur le corps (9) de la tige à rotule de manière à pouvoir coulisser longitudinalement dans une mesure limitée indépendamment l'une de l'autre et sur le corps (9) de la tige à rotule est monté de manière à pouvoir tourner un goujon excentrique (4) traversant la partie de coulisseau (22), qui bute, et qui est relié par l'intermédiaire d'un entraîneur à la partie de coulisseau (21) qui s'engage.

9. Dispositif selon la revendication 8, caractérisé en ce que la partie de coulisseau (21) qui s'engage est sollicitée par une force de ressort (25) poussant en direction de l'extrémité du corps.

10. Dispositif selon la revendication 8, caractérisé en ce que l'entraîneur est une plaque de guidage (29) reliée au goujon excentrique (4), munie d'une découpe en arc de cercle (28) et dans la découpe (28) de laquelle s'engage un goujon (26) relié à la partie de coulisseau (21) qui s'engage.

11. Dispositif selon une ou plusieurs des revendications précédentes, caractérisé en ce que le corps (9) de la tige à rotule est carré, et en ce que les faces latérales (30, 31) du corps (9) de la tige à rotule ont une forme de coin transversalement à son extension longitudinale.

**Claims**

1. Removable ball hitch with mounting, in particular for passenger cars, consisting of a sleeve (1) which is fitted to the rear of the vehicle and into which the ball hitch (2) can be inserted by its shaft (9) and can be locked in the inserted position by means of a slider (3) which is longitudinally displaceable in the direction of the shaft (9) and guides the ball hitch (2) to a stop, characterised in that the slider (3) is fitted to the ball hitch shaft (9) so that it can be longitudinally displaced and locked in the end position, and has a reinforcement (16) which, in the operating state, engages (15) in the sleeve (1) and bears against the end edge (18) of the sleeve (1) on the insertion side, that a cam (13), which bears against the rear end face (17) of the sleeve in the operating state, is provided on the end of the ball hitch shaft (9) and that the clear width of the sleeve (1) guiding the ball hitch shaft (9) corresponds on the insertion side to the height of the slider (3) plus the thickness of the shaft (9) plus the height of the cam (13), and the clear width at the end of the sleeve on the slider side is reduced by a step (20) to the height of the slider (3) plus the shaft thickness.

2. Device according to Claim 1, characterised in that the slider (3) is loaded by a spring force which urges the slider (3) in the direction of the shaft end.

3. Device according to one or more of the preceding claims, characterised in that two lugs (11) which receive the slider (3) between them are arranged on the ball hitch shaft (9) and a locking bolt is provided which, in the operating position, passes through the lugs (11) and the slider (3) and is preferably spring-loaded.

4. Device according to Claim 3, characterised in that the rear and front end edges (17, 18) of the sleeve are chamfered in the zone of the cam (13) and the reinforcement (16), and the cam (13) and the slider reinforcement (16) abutting against the front sleeve end edge are chamfered towards the interior of the sleeve (1), and that the locking bolt is an eccentric bolt (4) which can be rotated and fixed in the operating position.

5. Device according to Claim 4, characterised in that the eccentric bolt (4) engages into a sliding piece (6) which is guided in the slider (3) to be slightly displaceable transversely.

6. Device according to Claim 5, characterised in that the sliding piece (6) consists of a slightly elastic material.

7. Device according to Claim 5 or 6, characterised in that the sliding piece (6) is square in cross-section and its bore is provided off-centre with different distances from the outer surfaces.

8. Device according to one or more of the preceding claims, characterised in that the slider is divided into two, namely the part (21) engaging in the sleeve (1) and the part (22) abutting against the sleeve (1), the two parts (21, 22) being guided independently of one another for limited longitudinal displacement on the ball hitch shaft (9) and, on the ball hitch shaft (9) an eccentric bolt (4) is rotatably mounted which passes through the abutting slider part (22) and is connected via a dog to the engaging slider part (21)

9. Device according to Claim 8, characterised in that the engaging slider part (21) is loaded by a spring force (25) urging it in the direction of the shaft end.

10. Device according to Claim 8, characterised in that the dog is a guide sheet (29) which is provided with a cut-out (28) in the form of a circular arc and is connected to the eccentric bolt (4), and in the cut-out (28) of which a bolt (26) connected to the engaging slider part (21) engages.

11. Device according to one or more of the preceding claims, characterised in that the ball hitch shaft (9) is of square shape and that the side faces (30, 31) of the ball hitch shaft (9) are made in the form of wedges transversely to its longitudinal run.

Fig.1

Fig. 2

2/3

0 037 572

Fig. 3

Fig. 4